# EUROPEAN PATENT SPECIFICATION

(11) **EP 4 349 626 B1**
(45) Date of publication and mention of the grant of the patent: **22.01.2025**
(21) Application number: 23201546.1
(22) Date of filing: 04.10.2023
(51) Int. Cl.: B60K 1/00, B60K 1/04

(54) **A VEHICLE PROVIDED WITH AN ELECTRIC MOTOR**
FAHRZEUG MIT EINEM ELEKTROMOTOR
VÉHICULE ÉQUIPÉ D'UN MOTEUR ÉLECTRIQUE

(30) Priority: 05.10.2022 NL 2033240
(43) Date of publication of application: 10.04.2024
(73) Proprietor: DAF Trucks N.V., 5643 TW Eindhoven (NL)
(72) Inventor: DINGEMANS, Cornelis Petrus Adrianus, 5643 TW Eindhoven (NL); COPPEN, Thijs Henricus Josephus, 5643 TW Eindhoven (NL); GOESSEN, Nick Elisabeth Pierre, 5643 TW Eindhoven (NL)
(74) Representative: V.O.

(56) References cited:
- EP-A1- 3 925 808
- CN-A- 103 863 080
- CN-A- 105 438 262
- CN-A- 105 932 191
- CN-A- 113 815 394
- DE-A1- 102017 002 198

## Description

The invention relates to a vehicle provided with an electric motor configured to at least partially propel the vehicle, a vehicle battery at least comprising a battery module, said battery module comprising battery packs configured to at least partially power the electric motor, and a chassis comprising a first elongate chassis beam and a second elongate chassis beam, both extending along a length of the vehicle, each first and second elongate chassis beam comprising an inner surface and an outer surface, the inner surfaces of the first and second chassis beams facing each other, the outer surfaces of the first and second chassis beams facing away from each other, and at least one cross beam connecting the first elongate chassis beam and the second elongate chassis beam, wherein the battery module is arranged on an outer surface of the first and second elongate chassis beam, respectively;
wherein the vehicle further comprises a battery mounting system for mounting the vehicle battery to the chassis, the battery mounting system for the battery module comprises:
   - a battery box configured to hold and support the battery packs of the battery module;
   - a front bracket mounted to and projecting from the outer surface of the respective elongate chassis beam; and
   - a posterior bracket mounted to and projecting from the outer surface of the respective elongate chassis beam such that the posterior bracket is spaced apart from the front bracket for receiving the respective battery box between the front bracket and the posterior bracket;
wherein each of the brackets is a triangularly shaped bracket comprising a chassis beam attachment portion for connecting the triangularly shaped bracket to an outer surface of an elongate chassis beam, an upper horizontal portion and an angled portion extending downwardly between a front end of the upper horizontal portion towards the respective elongate chassis beam, wherein the chassis beam attachment portion of the triangularly shaped brackets is planar. Such a vehicle provided with an electric motor is disclosed in the co-pending Dutch patent application NL2031489. Such a vehicle is also disclosed in CN113815394A.

In vehicles provided with an electric motor and battery packs mounted to the elongate chassis beams of the chassis, the total weight of the components is relatively high, which weight can result in increased vibration and/or shear stresses which are transferred to the chassis when the vehicle is in motion when compared to vehicle provided with an internal combustion engine.

It is an object of the invention to provide a vehicle with an electric motor in which the battery packs and the electric motor are suspended such that the transference of vibrations and/or shear stresses to the chassis is kept within acceptable limits.

According to the invention this object is obtained by providing a vehicle provided with an electric motor configured to at least partially propel the vehicle, a vehicle battery at least comprising a battery module, said battery module comprising battery packs configured to at least partially power the electric motor, and a chassis comprising a first elongate chassis beam and a second elongate chassis beam, both extending along a length of the vehicle, each first and second elongate chassis beam comprising an inner surface and an outer surface, the inner surfaces of the first and second chassis beams facing each other, the outer surfaces of the first and second chassis beams facing away from each other, and at least one cross beam connecting the first elongate chassis beam and the second elongate chassis beam, wherein the battery module is arranged on an outer surface of the first and second elongate chassis beam, respectively;

wherein the vehicle further comprises a battery mounting system for mounting the vehicle battery to the chassis, the battery mounting system for the battery module comprises:
- a battery box configured to hold and support the battery packs of the battery module;
- a front bracket mounted to and projecting from the outer surface of the respective elongate chassis beam; and
- a posterior bracket mounted to and projecting from the outer surface of the respective elongate chassis beam such that the posterior bracket is spaced apart from the front bracket for receiving the respective battery box between the front bracket and the posterior bracket;

wherein each of the brackets is a triangularly shaped bracket comprising a chassis beam attachment portion for connecting the triangularly shaped bracket to an outer surface of an elongate chassis beam, an upper horizontal portion and an angled portion extending downwardly between a front end of the upper horizontal portion towards the respective elongate chassis beam, wherein the chassis beam attachment portion of the triangularly shaped brackets is planar, characterized in that
the vehicle further comprises a suspension for the electric motor for suspending the electric motor in between the first elongate chassis beam and the second elongate chassis beam; and in that the suspension for the electric motor comprises at least one electric motor bracket, said at least one electric motor bracket having a flat flange mounted on the planar chassis beam attachment portion of a respective triangularly shaped bracket. In this manner the suspension for the battery box and the electric motor have an overlap at the position of the flat flange of the electric motor bracket and the planar chassis beam attachment portion of a respective triangularly shaped bracket as a result of which the planar chassis beam attachment portion of a respective triangularly shaped bracket provides a stiff surface for the flat flange of the electric motor bracket diverging load away from the elongate chassis beams. In case, in contrast, the flat flange of the electric motor bracket and the planar chassis beam attachment portion of a respective triangularly shaped bracket would not overlap, i.e. in case the flat flange of the electric motor bracket and the planar chassis beam attachment portion of a respective triangularly shaped bracket would be attached to the respective chassis beam at spaced locations both the flat flange of the electric motor bracket and the planar chassis beam attachment portion of a respective triangularly shaped bracket would transfer high loads to the chassis as a result of which the chassis beam could shear. Since in accordance with the invention the flat flange is mounted on the planar chassis beam attachment portion of a respective triangularly shaped bracket, which planar chassis beam attachment portion of a respective triangularly shaped bracket is mounted to the chassis beam, it is observed that the electric motor is not suspended or carried by the respective triangularly shaped bracket and thus the electric motor does not generate any loads on the respective triangularly shaped bracket.

In an embodiment of a vehicle provided with an electric motor according to the invention the suspension for the electric motor comprises removable vibration dampers for suspending the electric motor to the electric motor bracket. By using removable vibration dampers the electric motor can be easily removed in a downward direction which is especially useful for service.

In an embodiment of a vehicle with an electric motor according to the invention the flat flange of the electric motor bracket has a downward extension part to which the electric motor is connected and wherein a cross brace is connected between the downward extension part of the electric motor bracket and the respective triangularly shaped bracket, the cross brace extending substantially horizontally. By connecting a horizontal cross brace between the downward extension part of the electric motor bracket and the respective triangularly shaped bracket, i.e. the cross brace extends at least substantially transverse to the respective triangularly shaped bracket, it appears that vibrations from the electric motor and the battery box are transferred in a lesser extent to the respective chassis beam without any load transfer of the electric motor to the respective triangularly shaped bracket and vice versa, since by the horizontal extension of the cross brace the electric motor is not suspended to the respective triangularly shaped bracket.

In a further embodiment of a vehicle with an electric motor according to the invention the cross brace is provided with holding means for high voltage cables and/or cooling water hoses. By providing holding means for high voltage cables and/or cooling water hoses an electric motor can be relatively easily installed on the chassis. It is in addition observed here that the electric motor bracket having a flat flange and the triangularly shaped bracket having the planar chassis beam attachment portion can be pre-assembled as a result of which mounting of the electric motor and the battery box can be effected relatively easy.

In a still further embodiment of a vehicle provided with an electric motor according to the invention in which the battery module is arranged on one of the outer surface of the first elongate chassis beam and the second elongate chassis beam only, the suspension for the electric motor comprises a further electric motor bracket having a flat flange mounted directly to the outer surface of the other one of the outer surface of the first elongate chassis beam and the second elongate chassis beam. Preferably, the flat flange of the further electric motor bracket has a downward extension part to which the electric motor is connected. In case the battery mounting system comprises an elongated cross member connected between the triangularly shaped bracket arranged on the one of the outer surface of the first elongate chassis beam and the second elongate chassis beam and the downward extension part of the further electric motor bracket, increased stiffness for the battery module mounting system is provided. The stiffness is increased even further when the elongated cross member is also connected to the inner surfaces of the first and the second elongate chassis beams.

The invention will be further explained with reference to the Figures, in which non-limiting exemplary embodiments of a vehicle according to the invention are schematically shown.

### BRIEF DESCRIPTION OF THE FIGURES

Figure 1 schematically shows in perspective a vehicle provided with an electric motor, a vehicle battery at least comprising a battery module, a chassis and a battery mounting system with triangularly shaped brackets according to the invention;
Figure 2 schematically shows a triangularly shaped bracket of the vehicle of Figure 1 comprising a planar chassis beam attachment portion;
Figure 3 schematically shows an electric motor bracket having a flat flange mounted on the planar chassis beam attachment portion of the triangularly shaped bracket of Figure 2;
Figure 4 schematically shows an embodiment of the invention in which the electric motor bracket comprises a cross brace provided with holding means for high voltage cables; and
Figure 5 schematically shows an embodiment of the invention in which the battery modules are arranged on one side of the chassis only.

### DETAILED DESCRIPTION

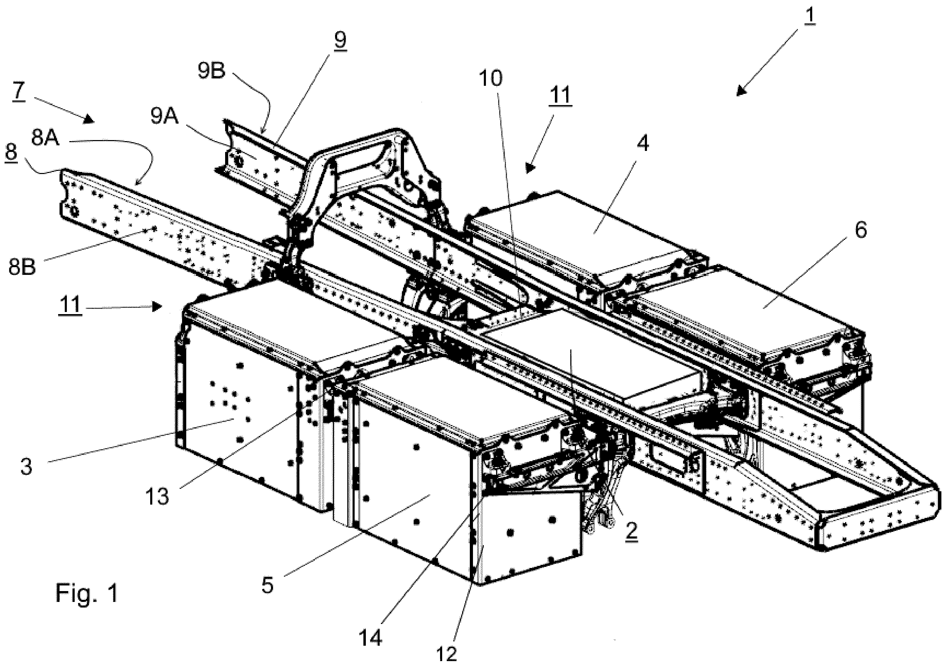

In Figure 1 the relevant part of an embodiment of a vehicle 1 according to the invention is schematically shown in perspective. The vehicle 1 is provided with an electric motor 2 (schematically shown) configured to at least partially propel the vehicle 1. In the embodiment shown in Figure 1, the vehicle 1 has a vehicle battery comprising four battery modules 3, 4, 5, 6 each comprising battery packs configured to at least partially power the electric motor. It will be clear that the invention is not limited to the number of battery modules provided that at least one battery module are present. The vehicle 1 further comprises a chassis 7 comprising a first elongate chassis beam 8 and a second elongate chassis beam 9, both extending along a length of the vehicle 1, and at least one cross beam 10 connecting the first elongate chassis beam 8 and the second elongate chassis beam 9. A front side of the vehicle 1 is shown at the left hand side of the figure, whilst a rear side of the vehicle 1 is shown at the right hand side of figure 1. The vehicle 1 further comprises a battery mounting system 11 for mounting the vehicle battery to the chassis 7. Each of the first and second elongate chassis beam 8, 9 comprising an inner surface 8A, 9A and an outer surface 8B, 9B. The inner surfaces 8A, 9A of the first and second chassis beams 8, 9 facing each other while the outer surfaces 8B, 9B of the first and second chassis beams 8, 9 are facing away from each other. As e.g. can be seen in Figure 1 a first battery module 3 and a second battery module 4 are arranged on a respective outer surface 8B, 9B of the first and second elongate chassis beam 8, 9, respectively, i.e. the battery modules 3 and 4 are positioned on the outer sides of the chassis beams 8, 9. Likewise a third battery module 5 and a fourth battery module 6 are arranged on a respective outer surface 8B, 9B of the first and second elongate chassis beam 8, 9, respectively, i.e. the battery modules 5 and 6 are positioned on the outer sides of the chassis beams 8, 9. For reasons of clarity it is observed that "horizontal" and "vertical" have the usual meaning referring to a normal operational mode in which the vehicle 1 is supported on a horizontal road surface. Further, "front" and "rear" are defined in the manner that "front" refers to the normal driving direction of the vehicle 1, which as shown in Figure 1 is to the left.

For each of the battery modules 3, 4, 5 and 6 the battery mounting system 11 comprises a similar construction, which will be described in more detail with regard to construction for the third module 5 below.

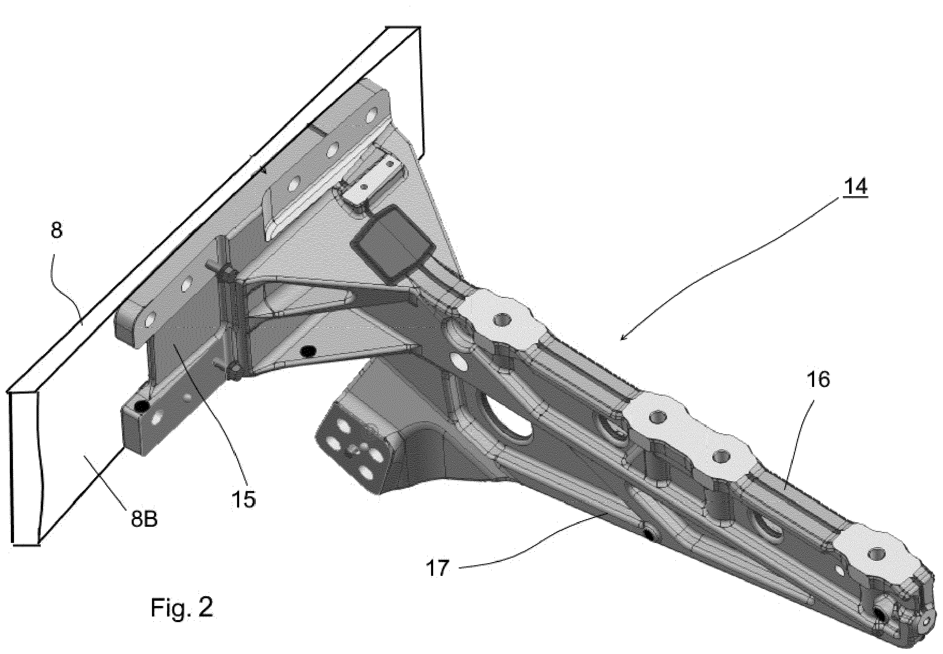

The battery mounting system 11 comprises a battery box 12 configured to hold and support the battery packs of the third battery module 5. As can be seen in Figure 1 for the third battery module 5 the battery mounting system 11 comprises a front bracket 13 mounted to and projecting from the first elongate chassis beam 8 away from the second elongate chassis beam 9 and a posterior bracket 14 mounted to and projecting from the first elongate chassis beam 8 away from the second elongate chassis beam 9. The posterior bracket 14 is spaced apart from the front bracket 13 in a direction opposite to the normal driving direction and therefore is called the posterior bracket. The battery box 12 is connected to and positioned between the front bracket 13 and the posterior bracket 14. The front and posterior brackets 13, 14 can be of the same construction, which construction is below described in more detail with regard to the posterior bracket 14 as shown in Figure 2.

As can be seen in Figure 2 the bracket 14 is a triangularly shaped bracket comprising a chassis beam attachment portion 15 for connecting the triangularly shaped bracket 14 to the outer surface 8B of the elongate chassis beam 8, an upper horizontal portion 16 and an angled portion 17 extending downwardly between a front end of the upper horizontal portion 16 towards the elongate chassis beam 8. As can be seen in Figure 2 the chassis beam attachment portion 15 is planar. At least the upper horizontal portion 16 comprises means, in the shown embodiment indicate by holes for receiving connectors, with which the battery box can be received by or mounted on the bracket 14.

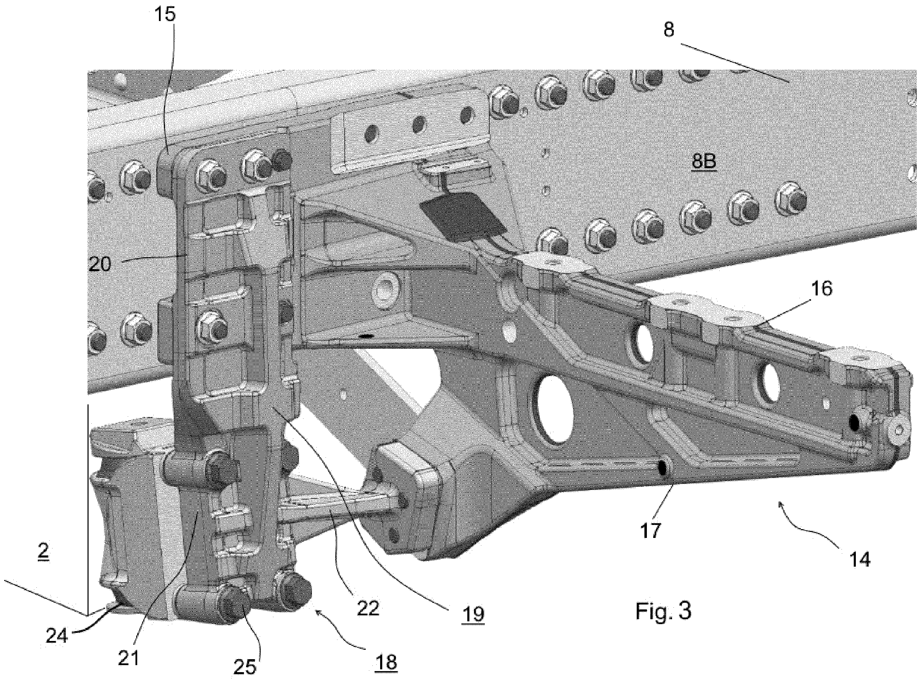

According to the invention the vehicle 1 comprises a suspension 18 for the electric motor 2 for suspending the electric motor 2 in between the first elongate chassis beam 8 and the second elongate chassis beam 9. The suspension 18 for the electric motor 2 for each of the triangularly shaped brackets comprises an electric motor bracket 19 having a flat flange 20 mounted on the planar chassis beam attachment portion 15 of the respective triangularly shaped bracket, the bracket 14 as shown in Figure 3. In this manner the suspension for the battery box and the electric motor have an overlap at the position of the flat flange 20 of the electric motor bracket 19 and the planar chassis beam attachment portion 15 of the respective triangularly shaped bracket 14. As a result of this construction the planar chassis beam attachment portion 15 of the triangularly shaped bracket 14 provides a stiff surface for the flat flange 20 of the electric motor bracket 19 diverging load away from the elongate chassis beam 8. Since in accordance with the invention the flat flange 20 is mounted on the planar chassis beam attachment portion 15 of the triangularly shaped bracket 14 which is mounted to the chassis beam 8, it is observed that the electric motor 2 is not suspended or carried by the triangularly shaped bracket 14 and thus the electric motor 2 does not generate any loads on the triangularly shaped bracket 14. The electric motor bracket 19 and the triangularly shaped bracket 14 can be pre-assembled as a result of which mounting of the electric motor 2 and the battery box 12 can be effected relatively easy. As indicated in Figure 3 the suspension for the electric motor 2 comprises removable vibration dampers 24 for suspending the electric motor 2 to the electric motor bracket 19. By loosening the bolts 25 the vibration dampers 24 can be separated from the bracket 19 and the electric motor 2 can be easily removed in a downward direction which is especially useful for service, in particular when the vehicle is a tractor or truck with non removeable components, i.e. chassis frame, rigid body or any other construction which is fixed to the chassis frame .

In the embodiment of a vehicle 1 with an electric motor 2 according to the invention as shown in Figure 3, the flat flange 20 of the electric motor bracket 19 has a downward extension part 21 to which the electric motor 2 is connected while further a cross brace 22 is connected between the downward extension part 21 of the electric motor bracket 19 and the triangularly shaped bracket 14, wherein the cross brace 22 extends in a substantial horizontally direction. In this manner the cross brace 22 extends at least substantially transverse to the triangularly shaped bracket 14 as a result of which vibrations from the electric motor 2 and the battery box are transferred in a lesser extent to the chassis beam 8 without any load transfer of the electric motor 2 to the triangularly shaped bracket 14 and vice versa.

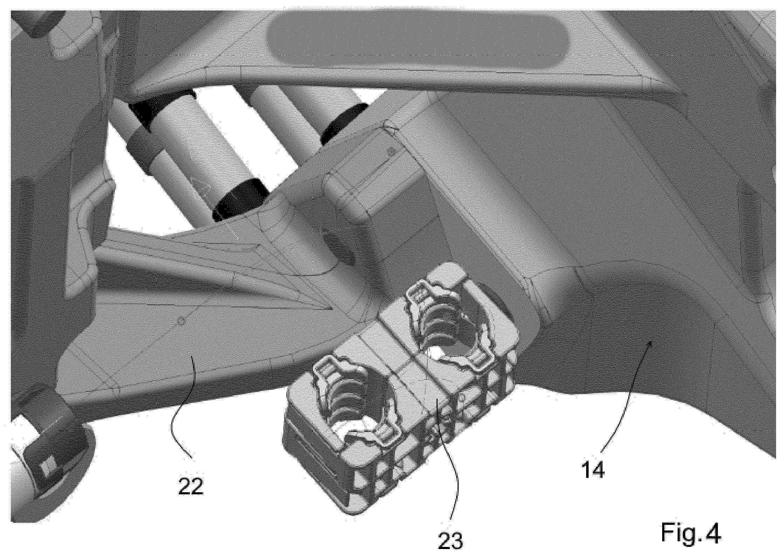

In Figure 4 an embodiment of the vehicle 1 according to the invention is shown in which the cross brace 22 is provided with holding means 23 for high voltage cables. By providing holding means 23 for high voltage cables an electric motor 2 can be relatively easily installed on the chassis 7. It is observed here that the cross brace can alternatively or additionally also be provided with holding means for cooling water hoses.

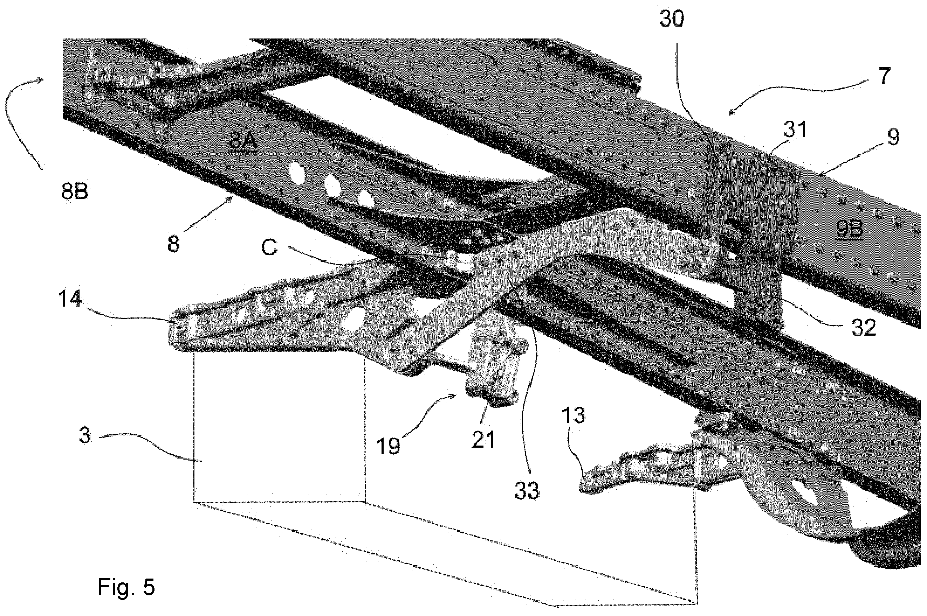

In Figure 5 an embodiment of a vehicle according to the invention is shown in which a battery module 3 (schematically indicated) is arranged on one side of the chassis 7 only, i.e. in the shown embodiment the battery module 3 is arranged on the outer surface 8B of the first elongate chassis beam 8 by means of a front and a posterior triangularly shaped bracket 13, 14. For mounting the electric motor (not shown for clarity) the suspension for the electric motor 2 comprises a further electric motor bracket 30 having a flat flange 31 mounted directly to the outer surface 9B of the second elongate chassis beam 9. The flat flange 31 of the further electric motor bracket 30 has a downward extension part 32 to which the electric motor is connected such that the electric motor is suspended between the downward extension part 21 of the electric motor bracket 19 and the downward extension part 32 of the further electric motor bracket 30. In the embodiment shown in Figure 5 the battery mounting system in addition comprises an elongated cross member 33 connected between the triangularly shaped bracket 14 arranged on the outer surface 8B of the first elongate chassis beam 8 and the downward extension part 32 of the further electric motor bracket 30, providing an increased stiffness for the battery module mounting system. As indicated in Figure 5 the elongated cross member 33 is also connected to the inner surface 8A of the first elongate chassis beam 8 at position C and likewise to the inner surface of the second elongate chassis beam 9 for providing additional stiffness which results in less battery damage.

## Claims

1. A vehicle (1) provided with an electric motor (2) configured to at least partially propel the vehicle (1), a vehicle battery at least comprising a battery module (3, 4, 5, 6), said battery module (3, 4, 5, 6) comprising battery packs configured to at least partially power the electric motor (2), and a chassis (7) comprising a first elongate chassis beam (8) and a second elongate chassis beam (9), both extending along a length of the vehicle (1), each first and second elongate chassis beam (8, 9) comprising an inner surface (8A, 9A) and an outer surface (8B, 9B), the inner surfaces (8A, 9A) of the first and second chassis beams (8, 9) facing each other, the outer surfaces (8B, 9B) of the first and second chassis beams (8, 9) facing away from each other, and at least one cross beam (10) connecting the first elongate chassis beam (8) and the second elongate chassis beam (9), wherein the battery module (3, 4, 5, 6) is arranged on an outer surface (8B, 9B) of the first and second elongate chassis beam (8, 9), respectively;
wherein the vehicle (1) further comprises a battery mounting system (11) for mounting the vehicle battery to the chassis (7), the battery mounting system (11) for the battery module (3, 4, 5, 6) comprises:
- a battery box (12) configured to hold and support the battery packs of the battery module (3, 4, 5, 6);
- a front bracket (13) mounted to and projecting from the outer surface (8B, 9B) of the respective elongate chassis beam (8, 9); and
- a posterior bracket (14) mounted to and projecting from the outer surface (8B, 9B) of the respective elongate chassis beam (8, 9) such that the posterior bracket (14) is spaced apart from the front bracket (13) for receiving the respective battery box (12) between the front bracket (13) and the posterior bracket (14);
wherein each of the brackets (13, 14) is a triangularly shaped bracket comprising a chassis beam attachment portion (15) for connecting the triangularly shaped bracket to an outer surface (8B, 9B) of an elongate chassis beam (8, 9), an upper horizontal portion (16) and an angled portion (17) extending downwardly between a front end of the upper horizontal portion (16) towards the respective elongate chassis beam, wherein the chassis beam attachment portion (15) of the triangularly shaped brackets is planar, **characterized in that**
the vehicle (1) further comprises a suspension (18) for the electric motor (2) for suspending the electric motor (2) in between the first elongate chassis beam (8) and the second elongate chassis beam (9); and **in that** the suspension (18) for the electric motor (2) comprises at least one electric motor bracket (19, 30), said at least one electric motor bracket (19, 30) having a flat flange (20, 31) mounted on the planar chassis beam attachment portion (15) of a respective triangularly shaped bracket (13, 14).

2. The vehicle (1) provided with an electric motor (2) according to claim 1, wherein the suspension (18) for the electric motor (2) comprises removable vibration dampers (24) for suspending the electric motor (2) to the electric motor bracket (19, 30).

3. The vehicle (1) provided with an electric motor (2) according to claim 1 or 2, wherein the flat flange (20, 31) of the electric motor bracket (19, 30) has a downward extension part (21, 32) and wherein a cross brace (22) is connected between the downward extension part (21, 32) of the electric motor bracket (19, 30) and the respective triangularly shaped bracket (13, 14), the cross brace (22) extending substantially horizontally.

4. The vehicle (1) provided with an electric motor (2) according to claim 3, wherein the cross brace (22) is provided with holding means (23) for high voltage cables and/or cooling water hoses.

5. The vehicle (1) provided with an electric motor (2) according to any one of the preceding claims, wherein the battery module (3, 4, 5, 6) is arranged on one of the outer surface (8B, 9B) of the first elongate chassis beam (8) and the second elongate chassis beam (9) only, wherein the suspension (18) for the electric motor (2) comprises a further electric motor bracket (30) having a flat flange (31) mounted directly to the outer surface (9B, 8B) of the other one of the outer surface (8B, 9B) of the first elongate chassis beam (8) and the second elongate chassis beam (9).

6. The vehicle (1) provided with an electric motor (2) according to claim 5, wherein the flat flange (31) of the further electric motor bracket (30) has a downward extension part (32) to which the electric motor (2) is connected.

7. The vehicle (1) provided with an electric motor (2) according to claim 6, wherein the battery mounting system (11) comprises an elongated cross member (33) connected between the triangularly shaped bracket (13, 14) arranged on the one of the outer surface (8B, 9B) of the first elongate chassis beam (8) and the second elongate chassis beam (9) and the downward extension part (32) of the further electric motor bracket (30).

8. The vehicle (1) provided with an electric motor (2) according to claim 7, wherein the elongated cross member (33) is also connected to the inner surfaces (8A, 9A) of the first and the second elongate chassis beams (8, 9).

## Patentansprüche

1. Fahrzeug (1) mit einem Elektromotor (2), dazu konfiguriert, das Fahrzeug (1) mindestens teilweise anzutreiben, einer Fahrzeugbatterie mit mindestens einem Batteriemodul (3, 4, 5, 6), wobei das Batteriemodul (3, 4, 5, 6) Batteriepacks aufweist, die zum mindestens teilweisen Versorgen des Elektromotors (2) mit Energie konfiguriert sind, und ein Fahrgestell (7) mit einem ersten länglichen Fahrgestellträger (8) und einem zweiten länglichen Fahrgestellträger (9), die sich beide entlang einer Länge des Fahrzeugs (1) erstrecken, wobei jeder erste und zweite längliche Fahrgestellträger (8, 9) eine Innenfläche (8A, 9A) und eine Außenfläche (8B, 9B) aufweist, wobei die Innenflächen (8A, 9A) des ersten und zweiten Fahrgestellträgers (8, 9) einander zugewandt sind und die Außenflächen (8B, 9B) des ersten und zweiten Fahrgestellträgers (8, 9) voneinander weggewandt sind, und mindestens einen Querträger (10), der den ersten länglichen Fahrgestellträger (8) und den zweiten länglichen Fahrgestellträger (9) verbindet, wobei das Batteriemodul (3, 4, 5, 6) auf einer Außenfläche (8B, 9B) des ersten beziehungsweise zweiten länglichen Fahrgestellträgers (8, 9) angeordnet ist;
wobei das Fahrzeug (1) ferner ein Batteriemontagesystem (11) zum Montieren der Fahrzeugbatterie am Fahrgestell (7) aufweist, wobei das Batteriemontagesystem (11) für das Batteriemodul (3, 4, 5, 6) Folgendes umfasst:
- einen Batteriekasten (12), dazu konfiguriert, die Batteriepacks des Batteriemoduls (3, 4, 5, 6) zu halten und zu tragen;
- eine vordere Halterung (13), montiert an der Außenfläche (8B, 9B) des jeweiligen länglichen Fahrgestellträgers (8, 9) und von dieser vorstehend; und
- eine hintere Halterung (14), montiert an der Außenfläche (8B, 9B) des jeweiligen länglichen Fahrgestellträgers (8, 9) und von dieser vorstehend, sodass die hintere Halterung (14) zur Aufnahme des jeweiligen Batteriekastens (12) zwischen der vorderen Halterung (13) und der hinteren Halterung (14) von der vorderen Halterung (13) beabstandet ist;
wobei jeder der Halterungen (13, 14) eine dreieckig geformte Halterung ist, umfassend einen Fahrgestellträgeranbringungsabschnitt (15) zum Verbinden der dreieckig geformten Halterung mit einer Außenfläche (8B, 9B) eines länglichen Fahrgestellträgers (8, 9), einen oberen horizontalen Abschnitt (16) und einen sich zwischen einem vorderen Ende des oberen horizontalen Abschnitts (16) abwärts in Richtung des entsprechenden länglichen Fahrgestellträgers erstreckenden abgewinkelten Abschnitt (17), wobei der Fahrgestellträgeranbringungsabschnitt (15) der dreieckig geformten Halterungen planar ist, **dadurch gekennzeichnet, dass**
das Fahrzeug (1) ferner eine Aufhängung (18) für den Elektromotor (2) zum Aufhängen des Elektromotors (2) zwischen dem ersten länglichen Fahrgestellträger (8) und dem zweiten länglichen Fahrgestellträger (9) aufweist; und **dadurch, dass** die Aufhängung (18) für den Elektromotor (2) mindestens eine Elektromotorhalterung (19, 30) aufweist, wobei die mindestens eine Elektromotorhalterung (19, 30) einen flachen Flansch (20, 31), montiert an dem planaren Fahrgestellträgeranbringungsabschnitt (15) einer jeweiligen dreieckig geformten Halterung (13, 14), aufweist.

2. Fahrzeug (1) mit einem Elektromotor (2) nach Anspruch 1, wobei die Aufhängung (18) für den Elektromotor (2) entfernbare Schwingungsdämpfer (24) zum Aufhängen des Elektromotors (2) an der Elektromotorhalterung (19, 30) aufweist.

3. Fahrzeug (1) mit einem Elektromotor (2) nach Anspruch 1 oder 2, wobei der flache Flansch (20, 31) der Elektromotorhalterung (19, 30) ein abwärts gerichtetes Verlängerungsteil (21, 32) aufweist und wobei eine Querstrebe (22) zwischen dem abwärts gerichteten Verlängerungsteil (21, 32) der Elektromotorhalterung (19, 30) und der jeweiligen dreieckig geformten Halterung (13, 14) angeschlossen ist, wobei sich die Querstrebe (22) im Wesentlichen horizontal erstreckt.

4. Fahrzeug (1) mit einem Elektromotor (2) nach Anspruch 3, wobei die Querstrebe (22) mit Haltemitteln (23) für Hochvoltkabel und/oder Kühlwasserschläuche versehen ist.

5. Fahrzeug (1) mit einem Elektromotor (2) nach einem der vorstehenden Ansprüche, wobei das Batteriemodul (3, 4, 5, 6) nur an einer der Außenflächen (8B, 9B) des ersten länglichen Fahrgestellträgers (8) und des zweiten länglichen Fahrgestellträgers (9) angeordnet ist, wobei die Aufhängung (18) für den Elektromotor (2) eine weitere Elektromotorhalterung (30) aufweist, mit einem direkt an der Außenfläche (9B, 8B) der anderen einen von der Außenfläche (8B, 9B) des ersten länglichen Fahrgestellträgers (8) und des zweiten länglichen Fahrgestellträgers (9) montierten flachen Flansch (31).

6. Fahrzeug (1) mit einem Elektromotor (2) nach Anspruch 5, wobei der flache Flansch (31) der weiteren Elektromotorhalterung (30) ein abwärts gerichtetes Verlängerungsteil (32) aufweist, mit dem der Elektromotor (2) verbunden ist.

7. Fahrzeug (1) mit einem Elektromotor (2) nach Anspruch 6, wobei das Batteriemontagesystem (11) einen länglichen Querträger (33) aufweist, angeschlossen zwischen der dreieckig geformten Halterung (13, 14), angeordnet an der einen von der Außenfläche (8B, 9B) des ersten länglichen Fahrgestellträgers (8) und des zweiten länglichen Fahrgestellträgers (9) und dem abwärts gerichteten Verlängerungsteil (32) der weiteren Elektromotorhalterung (30).

8. Fahrzeug (1) mit einem Elektromotor (2) nach Anspruch 7, wobei der längliche Querträger (33) auch mit den Innenflächen (8A, 9A) des ersten und zweiten länglichen Fahrgestellträgers (8, 9) verbunden ist.

## Revendications

1. Véhicule (1) équipé d'un moteur électrique (2) configuré pour propulser au moins partiellement le véhicule (1), d'une batterie de véhicule comprenant au moins un module de batterie (3, 4, 5, 6), ledit module de batterie (3, 4, 5, 6) comprenant des blocs batteries configurés pour alimenter au moins partiellement le moteur électrique (2), et d'un châssis (7) comprenant une première poutre de châssis allongée (8) et une seconde poutre de châssis allongée (9), toutes deux s'étendant sur une longueur du véhicule (1), chaque première et seconde poutres de châssis allongées (8, 9) comprenant une surface intérieure (8A, 9A) et une surface extérieure (8B, 9B), les surfaces intérieures (8A, 9A) des première et seconde poutres de châssis (8, 9) étant orientées l'une vers l'autre, les surfaces extérieures (8B, 9B) des première et seconde poutres de châssis (8, 9) étant orientées à l'opposé l'une de l'autre, et d'au moins une poutre transversale (10) reliant la première poutre de châssis allongée (8) et la seconde poutre de châssis allongée (9), dans lequel le module de batterie (3, 4, 5, 6) est agencé sur une surface extérieure (8B), 9B) des première et seconde poutres de châssis allongées (8, 9), respectivement ;
dans lequel le véhicule (1) comprend en outre un système de montage de batterie (11) pour monter la batterie du véhicule sur le châssis (7), le système de montage de batterie (11) pour le module de batterie (3, 4, 5, 6) comprend :
- un boîtier de batterie (12) configuré pour maintenir et supporter les blocs batteries du module de batterie (3, 4, 5, 6) ;
- un support avant (13) monté sur et faisant saillie à partir de la surface extérieure (8B, 9B) de la poutre de châssis allongée respective (8, 9) ; et
- un support postérieur (14) monté sur et faisant saillie à partir de la surface extérieure (8B, 9B) de la poutre de châssis allongée respective (8, 9) de sorte que le support postérieur (14) est espacé du support avant (13) pour recevoir le boîtier de batterie respectif (12) entre le support avant (13) et le support postérieur (14) ;
dans lequel chacun des supports (13, 14) est un support de forme triangulaire comprenant une partie de fixation de poutre de châssis (15) pour connecter le support de forme triangulaire à une surface extérieure (8B, 9B) d'une poutre de châssis allongée (8, 9), une partie horizontale supérieure (16) et une partie inclinée (17) s'étendant vers le bas entre une extrémité avant de la partie horizontale supérieure (16) vers la poutre de châssis allongée respective, dans lequel la partie de fixation de poutre de châssis (15) des supports de forme triangulaire est plane, **caractérisé en ce que** :
le véhicule (1) comprend en outre une suspension (18) pour le moteur électrique (2) afin de suspendre le moteur électrique (2) entre la première poutre de châssis allongée (8) et la seconde poutre de châssis allongée (9) ; et **en ce que** la suspension (18) pour le moteur électrique (2) comprend au moins un support de moteur électrique (19, 30), ledit au moins un support de moteur électrique (19, 30) ayant une bride plate (20, 31) montée sur la partie de fixation de poutre de châssis plane (15) d'un support de forme triangulaire respectif (13, 14).

2. Véhicule (1) équipé d'un moteur électrique (2) selon la revendication 1, dans lequel la suspension (18) pour le moteur électrique (2) comprend des amortisseurs de vibrations amovibles (24) pour suspendre le moteur électrique (2) au support de moteur électrique (19, 30).

3. Véhicule (1) équipé d'un moteur électrique (2) selon la revendication 1 ou 2, dans lequel la bride plate (20, 31) du support de moteur électrique (19, 30) présente une partie d'extension vers le bas (21, 32) et dans lequel une entretoise transversale (22) est connectée entre la partie d'extension vers le bas (21, 32) du support de moteur électrique (19, 30) et le support de forme triangulaire respectif (13, 14), l'entretoise transversale (22) s'étendant sensiblement horizontalement.

4. Véhicule (1) équipé d'un moteur électrique (2) selon la revendication 3, dans lequel l'entretoise transversale (22) est équipée de moyens de maintien (23) pour des câbles haute tension et/ou des tuyaux d'eau de refroidissement.

5. Véhicule (1) équipé d'un moteur électrique (2) selon l'une quelconque des revendications précédentes, dans lequel le module de batterie (3, 4, 5, 6) est agencé sur l'une de la surface extérieure (8B, 9B) de la première poutre de châssis allongée (8) et de la seconde poutre de châssis allongée (9) uniquement, dans lequel la suspension (18) pour le moteur électrique (2) comprend un support de moteur électrique supplémentaire (30) ayant une bride plate (31) montée directement sur la surface extérieure (9B, 8B) de l'autre de la surface extérieure (8B, 9B) de la première poutre de châssis allongée (8) et de la seconde poutre de châssis allongée (9).

6. Véhicule (1) équipé d'un moteur électrique (2) selon la revendication 5, dans lequel la bride plate (31) du support de moteur électrique supplémentaire (30) présente une partie d'extension vers le bas (32) à laquelle le moteur électrique (2) est connecté.

7. Véhicule (1) équipé d'un moteur électrique (2) selon la revendication 6, dans lequel le système de montage de batterie (11) comprend un élément transversal allongé (33) connecté entre le support de forme triangulaire (13, 14) agencé sur l'une de la surface extérieure (8B, 9B) de la première poutre de châssis allongée (8) et de la seconde poutre de châssis allongée (9) et de la partie d'extension vers le bas (32) du support de moteur électrique supplémentaire (30).

8. Véhicule (1) équipé d'un moteur électrique (2) selon la revendication 7, dans lequel l'élément transversal allongé (33) est également connecté aux surfaces internes (8A, 9A) des première et seconde poutres de châssis allongées (8, 9).
